# EUROPEAN PATENT APPLICATION

(11) **EP 1 586 576 A1**
(43) Date of publication of application: **19.10.2005**
(21) Application number: 03768243.2
(22) Date of filing: 25.12.2003
(51) Int. Cl.: C07F 9/6574

(54) **PROCESS FOR THE PRODUCTION OF PENTAERYTHRITOL DIPHOSPHONATES**

(30) Priority: 06.01.2003 JP 2003000177
(71) Applicant: Teijin Chemicals, Ltd., Tokyo 100-0011 (JP)
(72) Inventor: TANABE, Seiichi, Teijin Chemicals Ltd., Tokyo 100-0011 (JP); YANAGIDA, Takatsune, Teijin Chemicals Ltd., Tokyo 100-0011 (JP); IMAMURA, Koichi, Teijin Chemicals Ltd., Tokyo 100-011 (JP); TANDO, Kazushi, Teijin Chemicals Ltd., Tokyo 100-0011 (JP); TAKETANI, Yutaka, Osaka-shi, Osaka 538-0044 (JP)
(74) Representative: Hallybone, Huw George
(86) International application number: PCT/JP2003/016754
(87) International publication number: WO 2004/060900

(57) **Abstract**

A process for producing a pentaerythritol diphosphonate represented by the formula (5) **characterized by** (A) reacting phosphorus trichloride with pentaerythritol in the presence of an inert solvent to obtain pentaerythritol dichlorophosphite (reaction (a)), (B) reacting the pentaerythritol dichlorophosphite with an aralkyl alcohol to obtain a pentaerythritol diphosphite (reaction (b)), and (C) heat-treating the pentaerythritol diphosphite in the presence of a halogenated compound on the condition of a temperature of from 80 to 300°C (reaction (c)): 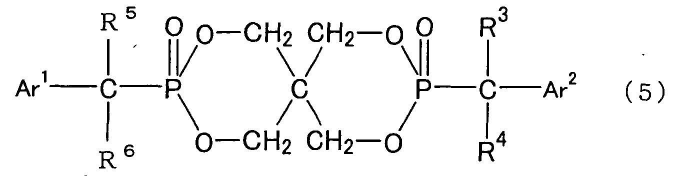 wherein Ar¹ and Ar², which may be the same as or different from each other, each represents a substituted or unsubstituted aryl group having from 6 to 20 carbon atoms, and R³, R⁴, R⁵ and R ⁶ which may be the same as or different from each other, each represents a hydrogen atom, a substituted or unsubstituted aryl group having from 6 to 20 carbon atoms, or a saturated or unsaturated hydrocarbon group having from 1 to 20 carbon atoms.

According to the production process of the invention, a particular pentaerythritol diphosphonate capable of being utilized as a fire retarding agent and the like can be provided with high purity and high yield by an industrially advantageous process excellent in productivity.

## Description

### DETAILED DESCRIPTION OF THE INVENTION

### TECHNICAL FIELD

The present invention relates to a process for producing a pentaerythritol diphosphonate compound having a particular structure. More specifically, it relates to a process for producing such a pentaerythritol diphosphonate compound that is capable of being used as an additive, such as a fire retarding agent, a crystallization nucleating agent and a plasticizer, and particularly has excellent effect as a fire retarding agent for a resin.

### BACKGROUND ART

Such resins as a polycarbonate resin, a polyphenylene oxide resin, a polyester resin, an ABS resin, a styrene resin, an epoxy resin and a polyamide resin are utilized in wide fields of art, such as a machine part, an electric part and an automobile part, owing to the excellent physical properties thereof. On the other hand, the resins are inherently combustible and thus are often required to have safety against fire, i.e., high fire retardancy, in addition to the balance of ordinary chemical and physical characteristics upon using as the aforementioned purposes.

As a method for imparting fire retardancy to a resin, it is generally practiced that a halogenated compound as a fire retarding agent and an antimony compound as a fire retarding assistant are added to the resin. However, the method has such a problem that a large amount of corrosive gas is formed on molding or combusting. Furthermore, particularly in recent years, adverse affects on environment or the like on discarding products are being concerned. Accordingly, a fire retarding agent and a fire retarding formulation that contain no halogen have been strongly demanded.

As a method for attaining fire retardancy of a thermoplastic resin by using no halogen fire retarding agent, it has been widely known that a metallic hydrate, such as aluminum hydroxide and magnesium hydroxide, is added. However, in order to obtain sufficient fire retardancy, a large amount of the metallic hydrate is necessarily added to provide such a disadvantage that the inherent characteristics of the resin are lost.

A triarylphosphate ester monomer and an aromatic phosphate ester of a condensed phosphate ester oligomer have also been frequently used as a fire retarding agent for imparting fire retardancy to a thermoplastic resin. However, the triarylphosphate ester monomer, such as triphenyl phosphate, significantly lowers heat resistance of a resin composition, and has a problem in handleability because it generates a large amount of gas upon extruding or molding due to the high volatility thereof. The compound further has such a problem that at least a part of the compound is lost from the resin upon heating the resin to a high temperature due to vaporization or bleeding. The condensed phosphate ester oligomer is improved in volatility but necessitates a liquid injection apparatus upon kneading with a resin because it is in a liquid state in many cases, whereby a problem arises in handleability on extrusion kneading.

A disubstituted pentaerythritol diphosphonate is subjected to various investigations mainly in a fire retarding agent for a resin. A thermoplastic resin can be imparted with fire retardancy by mixing the compound to the thermoplastic resin. A thermoplastic resin composition having the phosphonate compound mixed therein has such characteristics that the capabilities, such as heat resistance and impact resistance, are not lowered by mixing the fire retarding agent, and the compound is not lost from the resin due to vaporization or bleeding upon kneading.

Several production processes of the disubstituted pentaerythritol diphosphonate have been disclosed.

JP-A-05-163288 discloses a production example for obtaining diphenylpentaerythritol diphosphonate by reacting pentaerythritol with phenylphosphonic dichloride.

WO02/092690 discloses a process for obtaining dibenzylpentaerythritol diphosphonate through the Arbuzov transformation by reacting dibenzylpentaerythritol diphosphate with benzyl bromide.

U.S. Patent No. 4,174,343 discloses a process for obtaining dialkylpentaerythritol diphosphonate through the Arbuzov transformation by reacting dialkylpentaerythritol diphosphite with benzyl chloride or benzyl bromide in the presence or absence of a solvent.

U.S. Patent No. 3,141,032 and JP-A-54-157156 disclose a process for obtaining dialkylpentaerythritol diphosphonate through the Arbuzov transformation by heating dialkylpentaerythritol diphosphite in the presence of an alkyl halide catalyst or an alkali metal or alkaline earth metal bromide or iodide catalyst.

However, there has been such a problem with respect to the pentaerythritol diphosphonate having a particular structure of the invention that the target product cannot be always recovered at a high yield by the conventional production processes. Furthermore, the aforementioned patents fail to disclose details of the production processes and also fail to disclose the purity and yield of the target product, and thus there are various problems involved therein in view of an industrial production method.

### PROBLEMS TO BE SOLVED BY THE INVENTION

A first object of the invention is to provide such a process for producing a pentaerythritol diphosphonate that a particular pentaerythritol diphosphonate can be obtained at a high yield and a high purity.

A second object of the invention is to provide such a process for producing a particular pentaerythritol diphosphonate that is excellent in productivity and is industrially advantageous.

Another object of the invention is to provide a fire retarding agent for a resin that is useful for a styrene resin and a polyester resin through an industrially advantageous production process.

### MEANS FOR SOLVING THE PROBLEMS

According to the investigations made by the inventors, the objects of the invention can be attained by the following invention.

A process for producing a pentaerythritol diphosphonate represented by the formula (5) characterized by (A) reacting phosphorus trichloride with pentaerythritol in the presence of an inert solvent to obtain pentaerythritol dichlorophosphite represented by the formula (1) (reaction (a)), (B) reacting the pentaerythritol dichlorophosphite with an aralkyl alcohol represented by the formula (2) to obtain a pentaerythritol diphosphite represented by the formula (3) (reaction (b)), and (C) heat-treating the pentaerythritol diphosphite in the presence of a halogenated compound represented by the formula (4) on the condition of a temperature of from 80 to 300°C (reaction (c)): 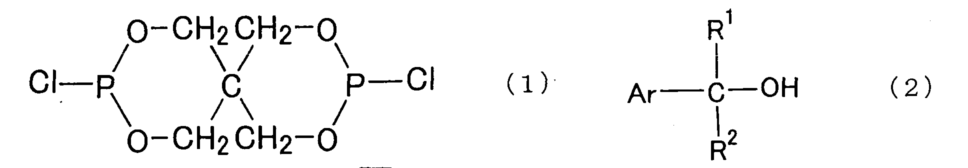 wherein Ar represents a substituted or unsubstituted aryl group having from 6 to 20 carbon atoms, and R¹ and R², which may be the same as or different from each other, each represents a hydrogen atom, a substituted or unsubstituted aryl group having from 6 to 20 carbon atoms, or a saturated or unsaturated hydrocarbon group having from 1 to 20 carbon atoms, 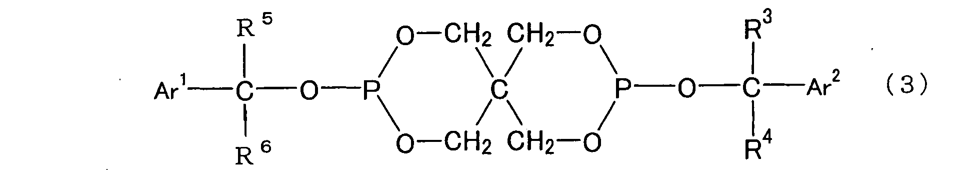 wherein Ar¹ and Ar², which may be the same as or different from each other, each represents a substituted or unsubstituted aryl group having from 6 to 20 carbon atoms, and R³, R⁴, R⁵ and R⁶, which may be the same as or different from each other, each represents a hydrogen atom, a substituted or unsubstituted aryl group having from 6 to 20 carbon atoms, or a saturated or unsaturated hydrocarbon group having from 1 to 20 carbon atoms, 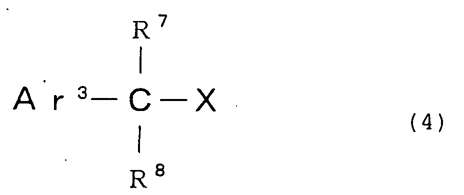 wherein Ar³ represents a substituted or unsubstituted aryl group having from 6 to 20 carbon atoms, R⁷ and R⁸, which may be the same as or different from each other, each represents a hydrogen atom or a saturated or unsaturated hydrocarbon group having from 1 to 20 carbon atoms, and X represents a Br group, 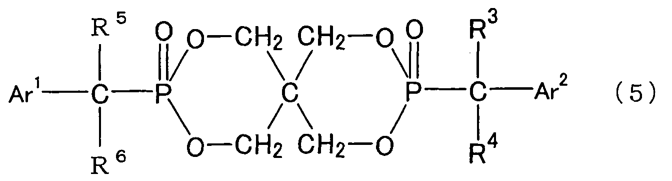 wherein Ar¹ and Ar², which may be the same as or different from each other, each represents a substituted or unsubstituted aryl group having from 6 to 20 carbon atoms, and R³, R⁴, R⁵ and R⁶, which may be the same as or different from each other, each represents a hydrogen atom, a substituted or unsubstituted aryl group having from 6 to 20 carbon atoms, or a saturated or unsaturated hydrocarbon group having from 1 to 20 carbon atoms.

The process for producing a pentaerythritol diphosphonate of the invention will be described in detail below.

Examples of the pentaerythritol diphosphonate compound include compounds represented by the formula (5), in which Ar¹ and Ar² each represents a phenyl group, various types of xylyl groups, various types of toluyl groups, a di-t-butylphenyl group, various types of cumenyl groups, a biphenyl group, a naphtyl group or the like, R³, R⁴, R⁵ and R⁶ each represents a hydrogen atom, a methyl group, an ethyl group, various types of propyl groups, various types of butyl groups, various types of pentyl groups, a propenyl group, a phenyl group, various types of toluyl groups, various types of xylyl groups, various types of cumenyl groups, a di-t-butylphenyl group, a biphenyl group, a naphtyl group or the like. Preferably Ar¹ and Ar² each represents a phenyl group, and R³, R⁴, R⁵ and R⁶ each represents a hydrogen atom, a methyl group or a phenyl group, and more preferably Ar¹ and Ar² each represents a phenyl group, and R³, R⁴, R⁵ and R⁶ each represents a hydrogen atom.

Specific examples thereof include
3,9-bis(phenylmethyl)-3,9-dioxo-2,4,8,10-tetraoxa-3,9-diph osphaspiro[5.5]undecane,
3,9-bis((2-methylphenyl)methyl)-3,9-dioxo-2,4,8,10-tetraox a-3,9-diphosphaspiro[5.5]undecane,
3,9-bis((3-methylphenyl)methyl)-3,9-dioxo-2,4,8,10-tetraox a-3,9-diphosphaspiro[5.5]undecane,
3,9-bis((4-methylphenyl)methyl)-3,9-dioxo-2,4,8,10-tetraox a-3,9-diphosphaspiro[5.5]undecane,
3,9-bis((2,4-dimethylphenyl)methyl)-3,9-dioxo-2,4,8,10-tet raoxa-3,9-diphosphaspiro[5.5]undecane,
3,9-bis((2,6-dimethylphenyl)methyl)-3,9-dioxo-2,4,8,10-tet raoxa-3,9-diphosphaspiro[5.5]undecane,
3,9-bis((3,5-dimethylphenyl)methyl)-3,9-dioxo-2,4,8,10-tet raoxa-3,9-diphosphaspiro[5.5]undecane,
3,9-bis((2,4,6-trimethylphenyl)methyl)-3,9-dioxo-2,4,8,10-tetraoxa-3,9-diphosphaspiro[5.5]undecane,
3,9-bis((2-sec-butylphenyl)methyl)-3,9-dioxo-2,4,8,1 0-tetraoxa-3,9-diphosphaspiro[5.5]undecane,
3,9-bis((4-sec-butylphenyl)methyl)-3,9-dioxo-2,4,8,10-tetr aoxa-3,9-diphosphaspiro[5.5]undecane,
3,9-bis((2,4-di-sec-butylphenyl)methyl)-3,9-dioxo-2,4,8,10 -tetraoxa-3,9-diphosphaspiro[5.5]undecane,
3,9-bis((2,6-di-sec-butylphenyl)methyl)-3,9-dioxo-2,4,8,10 -tetraoxa-3,9-diphosphaspiro[5.5]undecane,
3,9-bis((2,4,6-tri-sec-butylphenyl)methyl)-3,9-dioxo-2,4,8 ,10-tetraoxa-3,9-diphosphaspiro[5.5]undecane,
3,9-bis((2-tert-butylphenyl)methyl)-3,9-dioxo-2,4,8, 10-tetraoxa-3,9-diphosphaspiro[5.5]undecane,
3,9-bis((4-tert-butylphenyl)methyl)-3,9-dioxo-2,4,8,10-tet raoxa-3,9-diphosphaspiro[5.5]undecane,
3,9-bis((2,4-di-tert-butylphenyl)methyl)-3,9-dioxo-2,4,8,1 0-tetraoxa-3,9-diphosphaspiro[5.5]undecane,
3,9-bis((2,6-di-tert-butylphenyl)methyl)-3,9-dioxo-2,4,8,1 0-tetraoxa-3,9-diphosphaspiro[5.5]undecane,
3,9-bis((2,4,6-tri-tert-butylphenyl)methyl)-3,9-dioxo-2,4, 8,10-tetraoxa-3,9-diphosphaspiro[5.5]undecane,
3,9-bis((4-biphenyl)methyl)-3,9-dioxo-2,4,8,10-tetra oxa-3,9-diphosphaspiro[5.5]undecane,
3,9-bis((1-naphtyl)methyl)-3,9-dioxo-2,4,8,10-tetraoxa-3,9 -diphosphaspiro[5.5]undecane,
3,9-bis((2-naphtyl)methyl)-3,9-dioxo-2,4,8,10-tetraoxa-3,9 -diphosphaspiro[5.5]undecane,
3,9-bis((1-anthryl)methyl)-3,9-dioxo-2,4,8,10-tetraoxa-3,9 -diphosphaspiro[5.5]undecane,
3,9-bis((2-anthryl)methyl)-3,9-dioxo-2,4,8,10-tetraoxa-3,9 -diphosphaspiro[5.5]undecane,
3,9-bis((9-anthryl)methyl)-3,9-dioxo-2,4,8,10-tetraoxa-3,9 -diphosphaspiro[5.5]undecane,
3,9-bis(1-phenylethyl)-3,9-dioxo-2,4,8,10-tetraoxa-3 ,9-diphosphaspiro[5.5]undecane,
3,9-bis(2-methyl-2-phenylethyl)-3,9-dioxo-2,4,8,10-tetraox a-3,9-diphosphaspiro[5.5]undecane,
3,9-bis(diphenylmethyl)-3,9-dioxo-2,4,8,10-tetraoxa-3,9-di phosphaspiro[5.5]undecane,
3,9-bis(triphenylmethyl)-3,9-dioxo-2,4,8,10-tetraoxa-3,9-d iphosphaspiro[5.5]undecane,
3-phenylmethyl-9-((2,6-dimethylphenyl)methyl)-3,9-di oxo-2,4,8,10-tetraoxa-3,9-diphosphaspiro[5.5]undecane,
3-phenylmethyl-9-((2,4-di-tert-butylphenyl)methyl)-3,9-dio xo-2,4,8,10-tetraoxa-3,9-diphosphaspiro[5.5]undecane,
3-phenylmethyl-9-(1-phenylethyl)-3,9-dioxo-2,4,8,10-tetrao xa-3,9-diphosphaspiro[5.5]undecane,
3-phenylmethyl-9-diphenylmethyl-3,9-dioxo-2,4,8,10-tetraox a-3,9-diphosphaspiro[5.5]undecane,
3-((2,6-dimethylphenyl)methyl)-9-(1-phenylethyl)-3,9-dioxo -2,4,8,10-tetraoxa-3,9-diphosphaspiro[5.5]undecane,
3-((2,4-di-tert-butylphenyl)methyl)-9-(1-phenylethyl)-3,9-dioxo-2,4,8,10-tetraoxa-3,9-diphosphaspiro[5.5]undecane,
3-diphenylmethyl-9-(1-phenylethyl)-3,9-dioxo-2,4,8,10-tetr aoxa-3,9-diphosphaspiro[5.5]undecane,
3-diphenylmethyl-9-((2,6-dimethylphenyl)methyl)-3,9-dioxo-2,4,8,10-tetraoxa-3,9-diphosphaspiro[5.5]undecane and
3-diphenylmethyl-9-((2,4-di-tert-butylphenyl)methyl)-3,9-d ioxo-2,4,8,10-tetraoxa-3,9-diphosphaspiro[5.5]undecane.

Among these,
3,9-bis(phenylmethyl)-3,9-dioxo-2,4,8,10-tetraoxa-3,9-diph osphaspiro[5.5]undecane,
3,9-bis(1-phenylethyl)-3,9-dioxo-2,4,8,10-tetraoxa-3,9-dip hosphaspiro [5.5] undecane and
3,9-bis(diphenylmethyl)-3,9-dioxo-2,4,8,10-tetraoxa-3,9-di phosphaspiro[5.5]undecane are preferred, and
3,9-bis(phenylmethyl)-3,9-dioxo-2,4,8,10-tetraoxa-3,9-diph osphaspiro[5.5]undecane (dibenzylpentaerythritol diphosphonate) represented by the following formula (5-a) is particularly preferred.

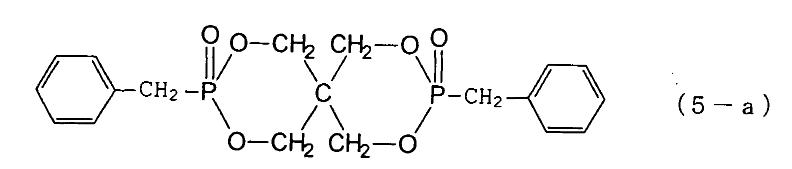

The pentaerythritol diphosphite used in the invention can be obtained by the reaction (a) and the reaction (b).

Examples of the pentaerythritol diphosphite of the invention include compounds represented by the formula (3), in which Ar¹ and Ar² each represents a phenyl group, various types of xylyl groups, various types of toluyl groups, a di-t-butylphenyl group, various types of cumenyl groups, a biphenyl group, a naphtyl group or the like, R³, R⁴, R⁵ and R⁶ each represents a hydrogen atom, a methyl group, an ethyl group, various types of propyl groups, various types of butyl groups, various types of pentyl groups, a propenyl group, a phenyl group, various types of toluyl groups, various types of xylyl groups, various types of cumenyl groups, a di-t-butylphenyl group, a biphenyl group, a naphtyl group or the like. Preferably, Ar¹ and Ar² each represents a phenyl group, and R³, R⁴, R⁵ and R⁶ each represents a hydrogen atom, a methyl group or a phenyl group, and more preferably Ar¹ and Ar² each represents a phenyl group, and R³, R⁴, R⁵ and R⁶ each represents a hydrogen atom.

Specifically,
3,9-bis((phenylmethyl)oxy)-2,4,8,10-tetraoxa-3,9-diphospha spiro[5.5]undecane,
3,9-bis(((2-methylphenyl)methyl)oxy)-2,4,8,10-tetraoxa-3,9 -diphosphaspiro[5.5]undecane,
3,9-bis(((3-methylphenyl)methyl)oxy)-2,4,8,10-tetraoxa-3,9 -diphosphaspiro[5.5]undecane,
3,9-bis(((4-methylphenyl)methyl)oxy)-2,4,8,10-tetraoxa-3,9 -diphosphaspiro[5.5]undecane,
3,9-bis(((2,4-dimethylphenyl)methyl)oxy)-2,4,8,10-tetraoxa -3,9-diphosphaspiro[5.5]undecane,
3,9-bis(((2,6-dimethylphenyl)methyl)oxy)-2,4,8,10-tetraoxa -3,9-diphosphaspiro[5.5]undecane,
3,9-bis(((3,5-dimethylphenyl)methyl)oxy)-2,4,8,10-tetraoxa -3,9-diphosphaspiro[5.5]undecane,
3,9-bis(((2,4,6-trimethylphenyl)methyl)oxy)-2,4,8,10-tetra oxa-3,9-diphosphaspiro[5.5]undecane,
3,9-bis(((2-sec-butylphenyl)methyl)oxy)-2,4,8,10-tet raoxa-3,9-diphosphaspiro[5.5]undecane,
3,9-bis(((4-sec-butylphenyl)methyl)oxy)-2,4,8,10-tetraoxa-3,9-diphosphaspiro[5.5]undecane,
3,9-bis(((2,4-di-sec-butylphenyl)methyl)oxy)-2,4,8,10-tetr aoxa-3,9-diphosphaspiro[5.5]undecane,
3,9-bis(((2,6-di-sec-butylphenyl)methyl)oxy)-2,4,8,10-tetr aoxa-3,9-diphosphaspiro[5.5]undecane,
3,9-bis(((2,4,6-tri-sec-butylphenyl)methyl)oxy)-2,4,8,10-t etraoxa-3,9-diphosphaspiro[5.5]undecane,
3,9-bis(((2-tert-butylphenyl)methyl)oxy)-2,4,8,10-te traoxa-3,9-diphosphaspiro[5.5]undecane,
3,9-bis(((4-tert-butylphenyl)methyl)oxy)-2,4,8,10-tetraoxa -3,9-diphosphaspiro[5.5]undecane,
3,9-bis(((2,4-di-tert-butylphenyl)methyl)oxy)-2,4,8,10-tet raoxa-3,9-diphosphaspiro[5.5]undecane,
3,9-bis(((2,6-di-tert-butylphenyl)methyl)oxy)-2,4,8,10-tet raoxa-3,9-diphosphaspiro[5.5]undecane,
3,9-bis(((2,4,6-tri-tert-butylphenyl)methyl)oxy)-2,4,8,10-tetraoxa-3,9-diphosphaspiro[5.5]undecane,
3,9-bis(((4-biphenyl)methyl)oxy)-2,4,8,10-tetraoxa-3 ,9-diphosphaspiro[5.5]undecane,
3,9-bis(((1-naphthyl)methyl)oxy)-2,4,8,10-tetraoxa-3,9-dip hosphaspiro[5.5]undecane,
3,9-bis(((2-naphthyl)methyl)oxy)-2,4,8,10-tetraoxa-3,9-dip hosphaspiro[5.5]undecane,
3,9-bis(((1-anthryl)methyl)oxy)-2,4,8,10-tetraoxa-3,9-diph osphaspiro[5.5]undecane,
3,9-bis(((2-anthryl)methyl)oxy)-2,4,8,10-tetraoxa-3,9-diph osphaspiro [5.5] undecane,
3,9-bis(((9-anthryl)methyl)oxy)-2,4,8,10-tetraoxa-3,9-diph osphaspiro[5.5]undecane,
3,9-bis((1-phenylethyl)oxy)-2,4,8,10-tetraoxa-3,9-di phosphaspiro[5.5]undecane,
3,9-bis((1-methyl-1-phenylethyl)oxy)-2,4,8,10-tetraoxa-3,9 -diphosphaspiro[5.5]undecane,
3,9-bis((diphenylmethyl)oxy)-2,4,8,10-tetraoxa-3,9-diphosp haspiro[5.5]undecane,
3,9-bis((triphenylmethyl)oxy)-2,4,8,10-tetraoxa-3,9-diphos phaspiro[5.5]undecane,
3-(phenylmethyl)oxy-9-((2,6-dimethylphenyl)methyl)oxy-2,4, 8,10-tetraoxa-3,9-diphosphaspiro[5.5]undecane,
3-(phenylmethyl)oxy-9-((2,4-di-tert-butylphenyl)methyl)oxy -2,4,8,10-tetraoxa-3,9-diphosphaspiro[5.5]undecane,
3-(phenylmethyl)oxy-9-(1-phenylethyl)oxy-2,4,8,10-tetraoxa -3,9-diphosphaspiro[5.5]undecane,
3-(phenylmethyl)oxy-9-(diphenylmethyl)oxy-2,4,8,10-tetraox a-3,9-diphosphaspiro[5.5]undecane,
3-((2,6-dimethylphenyl)methyl)oxy-9-(1-phenylethyl)oxy-2,4 ,8,10-tetraoxa-3,9-diphosphaspiro[5.5]undecane,
3-((2,4-di-tert-butylphenyl)methyl)oxy-9-(1-phenylethyl)ox y-2,4,8,10-tetraoxa-3,9-diphosphaspiro[5.5]undecane,
3-(diphenylmethyl)oxy-9-(1-phenylethyl)oxy-2,4,8,10-tetrao xa-3,9-diphosphaspiro[5.5]undecane,
3-(diphenylmethyl)oxy-9-((2,6-dimethylphenyl)methyl)oxy-2, 4,8,10-tetraoxa-3,9-diphosphaspiro[5.5]undecane and
3-(diphenylmethyl)oxy-9-((2,4-di-tert-butylphenyl)methyl)o xy-2,4,8,10-tetraoxa-3,9-diphosphaspiro[5.5]undecane are preferred.

Among these,
3,9-bis((phenylmethyl)oxy)-2,4,8,10-tetraoxa-3,9-diphospha spiro[5.5]undecane,
3,9-bis((1-phenylethyl)oxy)-2,4,8,10-tetraoxa-3,9-diphosph aspiro[5.5]undecane and
3,9-bis((diphenylmethyl)oxy)-2,4,8,10-tetraoxa-3,9-diphosp haspiro[5.5]undecane are preferred, and
3,9-bis((phenylmethyl)oxy)-2,4,8,10-tetraoxa-3,9-diphospha spiro[5.5]undecane is particularly preferred.

### Reaction (a) (First Step Reaction)

### Phosphorus Trichloride

### Purity

Phosphorous trichloride used in the invention desirably has a purity of 98% or more. Phosphorous trichloride having a high purity can be obtained, for example, by distilling a commercially available product in an inert atmosphere. The inert atmosphere is such a state that oxygen gas, moisture and the like capable of modifying phosphorous trichloride used in the invention are substantially not present. Specifically, the oxygen gas concentration in the system is desirably 5% or less, preferably 1% or less, and more preferably 100 ppm or less. Specific examples thereof include a method, in which the interior of the reaction system is substituted with an inert gas, such as nitrogen and argon, and then distillation is carried out under a stream of the inert gas or in an atmosphere of the inert gas. The oxygen concentration can be measured by the zirconia analysis method defined in JIS B7983 or the like. The purity of phosphorous trichloride can be quantitatively determined by gas chromatography, and also can be quantitatively determined by chemical reaction as disclosed in JIS K8404-1887.

### Pentaerythritol

### Purity and Water Content

Pentaerythritol used in the invention desirably has a purity of 98% or more and a water content of 1,000 ppm or less. Preferably, the water content is 500 ppm or less, and more preferably the water content is 100 ppm or less. Pentaerythritol having a high purity can be obtained mainly by recrystallizing a commercially available product from water to remove impurities having a high molecular weight. Pentaerythritol having a low water content can be obtained by drying under heat immediately before using in the reaction. The purity of pentaerythritol is quantitatively determined by gas chromatography. The water content of pentaerythritol is quantitatively determined by the Karl Fischer method.

### Molar Ratio of Pentaerythritol and Phosphorous Trichloride

The molar ratio of phosphorous trichloride to pentaerythritol in the invention is preferably from 195 to 240% by mole, and more preferably from 200 to 220% by mole, of phosphorous trichloride used per 100% by mole of pentaerythritol. In the case where the molar ratio is less than 195% by mole, there are cases where the recovery amount of the pentaerythritol diphosphonate finally obtained is considerably lowered. In the case where the molar ratio exceeds 240% by mole, on the other hand, there are cases where phosphorous trichloride remaining unreacted largely influences on the subsequent reactions to lower the recovery amount of the pentaerythritol diphosphonate finally obtained. In addition, there are cases where the amounts of waste products are increased to deteriorate the productivity considerably.

### Solvent

### Kind of Solvent

The solvent used in the reaction of phosphorous trichloride and pentaerythritol in the invention is an inert solvent that is not involved in the reaction, and is desirably one kind or two or more kinds of inert solvents selected from the group consisting of an aromatic hydrocarbon, an aliphatic hydrocarbon, a halogenated hydrocarbon and an oxygen atom-containing hydrocarbon. The solvents may be used solely or as a mixed solvent.

The solvent may be such an inert solvent that does not react with pentaerythritol, phosphorous trichloride and an organic base compound. Examples thereof include hexane, heptane, octane, decane, dodecane, diethyl ether, dipropyl ether, dibutyl ether, tetrahydrofuran, dioxane, methylene chloride, chloroform, carbon tetrachloride, benzene, chlorobenzene, o-dichlorobenzene, toluene, xylene, ethylbenzene, propylbenzene and butylbenzene. In particular, those having a boiling point of from 100 to 300°C under ordinary pressure are preferably used. Examples thereof include decane, dodecane, dibutyl ether, dioxane, chlorobenzene, o-dichlorobenzene, toluene, xylene and ethylbenzene, and xylene is particularly preferred.

### Water Content of Solvent

The solvent preferably has a water content of 1,000 ppm or less. In the case where the water content exceeds the value, it is confirmed that hydrolysis of phosphorous trichloride as a raw material is accelerated. It is more preferably 500 ppm or less, and particularly preferably 100 ppm or less.

### Catalyst

### Kind of Catalyst

In order to efficiently perform the reaction between phosphorous trichloride and pentaerythritol in the invention, a catalyst may be used. As the catalyst, an organic base compound that does not react with a phosphorous atom-chlorine atom bond is preferably used. The organic base compound that does not react with a phosphorous atom-chlorine atom bond is such an organic base compound that substantially does not have a nitrogen atom-hydrogen atom bond and/or an oxygen atom-hydrogen atom bond. The state where it substantially does not have the bonds means that the amount of nitrogen atom-hydrogen atom bonds and oxygen atom-hydrogen atom bonds in the organic base compound is 5, 000 ppm or less, preferably 1,000 ppm or less, and more preferably 500 ppm or less.

Examples of the organic base compound that does not react with a phosphorous atom-chlorine atom bond include aliphatic or aromatic, non-cyclic or cyclic amine and amide compounds. Examples of the compounds include trimethylamine, triethylamine, tri-n-propylamine, triisopropylamine, tri-n-butylamine, triisobutylamine, tri-t-butylamine, trihexylamine, tri-n-octylamine, methyldiethylamine, N,N-dimethycyclohexylamine, N,N-dimethylbenzylamine, triphenylamine, tribenzylamine, triphenethylamine, N,N-dimethylaniline, N,N-diethylaniline, N,N,N',N'-tetraethylmethanediamine, N,N,N',N'-tetramethylethylenediamine, N,N,N',N'-tetramethyl-1,4-butanediamine, N,N,N',N'-tetramethyl-1,3-butanediamine, 1-methylpyrrole, 1-ethylpyrrole, 1-methylpyrrolidine, 1-ethylpyrrolidine, oxazole, thiazole, 1-methylimidazole, 1-ethylimidazole, 1-butylimidazole, 1-methylpyrazole, 1-methylpiperidine, 1-ethylpiperidine, N,N'-dimethylpiperadine, pyridine, N,N-dimethyl-4-aminopyridine, N,N-diethyl-4-aminopyridine, 2-methoxypyridine, 4-methoxypyridine, 2-methylpyridine, 4-methylpyridine, 2,6-dimethylpyridine, 2,4,6-trimethylpyridine, pyridazine, pyrimidine, pyrazine, quinoline, isoquinoline, quinuclidine, quinazoline, 9-methylcarbazole, acridine, phenanthridine, hexamethylenetetramine, 1,8-diazabicyclo[5.4.0]-7-undecene, 1,5-diazabicyclo[4.3.0]-5-nonene, 1,4-diazabicyclo[2.2.2]octane, N,N-dimethylformamide, N,N-dimethylacetamide, N,N-diethylacetamide, N,N-diethylpropanamide, N,N-dimethylbenzamide, N-methyl-2-pyrrolidinone, N-methyl-2-pyrrolidone and N-methyl-2-piperidone.

Among these, triethylamine, triisopropylamine, tri-n-butylamine, N,N,N',N'-tetramethylethylenediamine, N,N-dimethylaniline, N,N-diethylaniline, pyridine, N,N-dimethyl-4-aminopyridine, 4-methylpyridine, 2,4,6-trimethylpyridine, quinoline, N,N-dimethylformamide and a copolymer of 4-vinylpyridine and styrene are preferred, triethylamine, N,N-diethylaniline, pyridine and N,N-dimethylformamide are more preferred, pyridine and N,N-dimethylformamide are further preferred, and pyridine is particularly preferred.

A compound having the aforementioned compound chemically bonded in a polymer may also be used. Examples thereof include poly(4-vinylpyridine), poly(2-vinylpyridine) and a copolymer of 4-vinylpyridine and styrene.

The organic base compound may be used as a sole compound or may be used in combination of two or more kinds thereof.

### Amount of Catalyst

The existing proportion of the organic base compound catalyst is preferably from 0.1 to 100% by mole per 100% by mole of phosphorous trichloride. It is practically desirably from 1 to 20% by mole.

### Method for mixing Phosphorous Trichloride and Pentaerythritol

As a method for mixing phosphorous trichloride and pentaerythritol in the invention, various methods may be applied, such as adding phosphorous trichloride dropwise to a suspension liquid of pentaerythritol, adding a suspension liquid of pentaerythritol dropwise to phosphorous trichloride, and adding pentaerythritol powder to phosphorous trichloride. Among these, a method of adding phosphorous trichloride dropwise to a suspension liquid of pentaerythritol is preferred from the standpoint of working efficiency.

### Reaction Temperature

The reaction temperature in the reaction between phosphorous trichloride and pentaerythritol in the invention is desirably in a range of from -10 to 90°C. It is more desirably from 0 to 60°C, and particularly desirably from 5 to 40°C. In the case where the reaction temperature is less than -10°C, there are cases where the reaction rate is considerably lowered, which brings about deterioration in productivity. In the case it exceeds 90°C, on the other hand, there are cases where a side reaction occurs to lower the recovery amount of the target pentaerythritol diphosphonate.

### Reaction Time

In the invention, the reaction time upon reacting phosphorous trichloride and pentaerythritol is not particularly determined, and they are preferably reacted over a period of time of from 1 to 500 minutes, and more preferably from 5 to 300 minutes. In the case where the reaction time is in the range, it is preferred since the heat generation amount per unit time and the generation amount of hydrogen chloride gas are small, the reaction temperature can be easily controlled, and the load on equipments, such as a heat exchanger, a condenser and a hydrogen chloride gas removing apparatus, can be lightened. The reaction time is preferably in the aforementioned range from the standpoint of production efficiency.

### Reaction Atmosphere

The reaction system of phosphorous trichloride and pentaerythritol in the invention is desirably maintained always in an inert gas atmosphere. An inert gas, such as nitrogen and argon, may be flowed in the reaction system therefore. Furthermore, in the case where the gas is continuously discharged to the exterior of the system, a hydrogen halide gas thus by-produced is also advantageously discharged along with the gas, and therefore it is preferred that the inert gas is flowed in the reaction system rather than stayed in the reaction system.

In the invention, phosphorous trichloride and pentaerythritol are reacted in the presence of an inert solvent that is not involved in the reaction, whereby 3,9-dichloro-2,4,8,10-tetraoxa-3,9-diphosphaspiro [5.5] unde cane (i.e., a compound represented by the formula (1), hereinafter, referred to as pentaerythritol dichlorophosphite) is formed, and simultaneously, 4 mole of hydrogen chloride is formed as a by-product per 1 mole of pentaerythritol. The pentaerythritol dichlorophosphite compound is an unstable compound.

### Removal of Hydrogen Chloride

In the invention, it is preferred that hydrogen chloride is removed from a solution or a suspension liquid of pentaerythritol dichlorophosphite obtained through the aforementioned reaction. As the method therefore, the heating treatment or the depressurizing treatment shown below is performed.

### Heating Treatment

In the heating treatment, the solution or suspension liquid of pentaerythritol dichlorophosphite is heated to a temperature of from 40 to 120°C. The period of time for the heating treatment is preferably in a range of from 1 minute to 1 hour, and more preferably in a range of from 10 to 30 minutes. The heating treatment is preferably carried out in an inert gas atmosphere.

### Depressurizing Treatment

In the depressurizing treatment, the solution or suspension liquid of pentaerythritol dichlorophosphite is subjected to reduced pressure. The depressurizing degree is preferably in a range of from 100 to 70,000 Pa, more preferably in a range of from 400 to 40,000 Pa, and further preferably in a range of from 800 to 20,000 Pa. It is preferred in the depressurizing treatment that hydrogen chloride is removed, but the reaction solvent and the reaction mixture are not removed. Specific examples of the method include such a method that the solution or suspension liquid of pentaerythritol dichlorophosphite maintained at room temperature is passed through a condenser cooled to 0°C or less to be subject to a depressurizing treatment at a depressurizing degree of about 3,000 Pa, whereby only hydrogen chloride is removed. The period of time for the depressurizing treatment cannot be determined unconditionally because it varies depending on the amount of the solution or suspension liquid of pentaerythritol dichlorophosphite and the depressurizing degree, and in general, it may be performed for a period of from 1 minute to 1 hour, and preferably from 10 to 30 minutes.

Pentaerythritol dichlorophosphite may be isolated and purified from the solution or suspension liquid of pentaerythritol dichlorophosphite obtained through the reaction (a), but the solution or suspension liquid may be used as it is to the reaction (b). The process step of isolating and purifying pentaerythritol dichlorophosphite can be omitted to obtain excellent workability and production efficiency. Moreover, unstable pentaerythritol dichlorophosphite can be suppressed from being decomposed to the minimum, and as a result, it brings about improvement of the recovery amount of pentaerythritol diphosphonate as the target product of the invention.

### Reaction (b) (Second Step Reaction)

### Organic Base Compound

### Kind of Organic Base Compound

In the invention, an organic base compound may be preferably used upon reacting the pentaerythritol dichlorophosphite obtained by the reaction (a) with an aralkyl alcohol. As the organic base compound, an organic base compound that does not react with a phosphorous atom-chlorine atom bond is preferably used. The organic base compound that does not react with a phosphorous atom-chlorine atom bond is such an organic base compound that substantially does not have a nitrogen atom-hydrogen atom bond and/or an oxygen atom-hydrogen atom bond. The state where it substantially does not have the bonds means that the amount of nitrogen atom-hydrogen atom bonds and oxygen atom-hydrogen atom bonds in the organic base compound is 5,000 ppm or less, preferably 1,000 ppm or less, and more preferably 500 ppm or less.

Examples of the organic base compound that does not react with a phosphorous atom-chlorine atom bond include aliphatic or aromatic, non-cyclic or cyclic amine and amide compounds. Examples of the compounds include trimethylamine, triethylamine, tri-n-propylamine, triisopropylamine, tri-n-butylamine, triisobutylamine, tri-t-butylamine, trihexylamine, tri-n-octylamine, methyldiethylamine, N,N-dimethycyclohexylamine, N,N-dimethylbenzylamine, triphenylamine, tribenzylamine, triphenethylamine, N,N-dimethylaniline, N,N-diethylaniline, N,N,N',N'-tetraethylmethanediamine, N,N,N',N'-tetramethylethylenediamine, N,N,N',N'-tetramethyl-1,4-butanediamine, N,N,N',N'-tetramethyl-1,3-butanediamine, 1-methylpyrrole, 1-ethylpyrrole, 1-methylpyrrolidine, 1-ethylpyrrolidine, oxazole, thiazole, 1-methylimidazole, 1-ethylimidazole, 1-butylimidazole, 1-methylpyrazole, 1-methylpiperidine, 1-ethylpiperidine, N,N'-dimethylpiperadine, pyridine, N,N-dimethyl-4-aminopyridine, N,N-diethyl-4-aminopyridine, 2-methoxypyridine, 4-methoxypyridine, 2-methylpyridine, 4-methylpyridine, 2,6-dimethylpyridine, 2,4,6-trimethylpyridine, pyridazine, pyrimidine, pyrazine, quinoline, isoquinoline, quinuclidine, quinazoline, 9-methylcarbazole, acridine, phenanthridine, hexamethylenetetramine, 1,8-diazabicyclo[5.4.0]-7-undecene, 1,5-diazabicyclo[4.3.0]-5-nonene, 1,4-diazabicyclo[2.2.2]octane and the like.

Among these, triethylamine, triisopropylamine, tri-n-butylamine, N,N,N',N'-tetramethylethylenediamine, N,N-dimethylaniline, N,N-diethylaniline, pyridine, N,N-dimethyl-4-aminopyridine, 4-methylpyridine, 2,4,6-trimethylpyridine, quinoline and a copolymer of 4-vinylpyridine and styrene are preferred, triethylamine, tri-n-butylamine, pyridine, N,N-dimethylaniline and N,N-diethylaniline are more preferred, and pyridine, N,N-dimethylaniline and N,N-diethylaniline are particularly preferred.

A compound having the aforementioned compound chemically bonded in a polymer may also be used. Examples thereof include poly(4-vinylpyridine), poly(2-vinylpyridine) and a copolymer of 4-vinylpyridine and styrene.

The organic base compound may be used as a sole compound or may be used in combination of two or more kinds thereof. Using Amount of Organic Base Compound

In the invention, the using amount of the organic base compound is desirably from 180 to 400% by mole per 100% by mole of pentaerythritol. In the case where it is less than 180% by mole, there are cases where hydrogen chloride thus by-produced cannot be scavenged, and hydrogen chloride thus not scavenged decomposes the resulting pentaerythritol diphosphite, whereby the recovery amount of the pentaerythritol diphosphonate as the target compound of the invention is considerably lowered. In the case where the proportion of the organic base compound exceeds 400% by mole with respect to pentaerythritol, there are cases where the load of recovery or disposal of the organic base compound is increased to deteriorate the production efficiency. The using amount is more preferably from 190 to 250% by mole, and further preferably from 195 to 220% by mole.

### Water Content of Organic Base Compound

The water content of the organic base compound is desirably 2, 000 ppm or less. In the case where it exceeds 2, 000 ppm, there are cases where a by-product derived from water is formed, and the by-product impairs the formation of the pentaerythritol diphosphite of the invention and is involved in decomposition of the pentaerythritol diphosphite itself, whereby the recovery amount of the pentaerythritol diphosphonate as the target compound of the invention is considerably lowered. The water content is more desirably 1, 000 ppm or less, and particularly desirably 100 ppm or less.

### Aralkyl Alcohol

### Kind of Aralkyl Alcohol

The aralkyl alcohol used in the invention is a compound represented by the formula (2), and examples thereof include compounds represented by the formula (2), in which Ar represents a phenyl group, various types of xylyl groups, various types of tolyl groups, a di-t-butylphenyl group, a biphenyl group, a naphthyl group or the like, and R¹ and R² each represents a hydrogen atom, a methyl group, an ethyl group, various types of propyl groups, various types of butyl groups, various types of pentyl groups, a propenyl group, a phenyl group, various types of toluyl groups, various types of xylyl groups, various types of cumenyl groups, a di-t-butylphenyl group, a biphenyl group, a naphthyl group or the like. Preferably, Ar represents a phenyl group, and R¹ and R² each represents a hydrogen atom, a methyl group or a phenyl group, and particularly preferably, Ar represents a phenyl group, and R¹ and R² each represents a hydrogen atom.

Specific examples thereof include benzyl alcohol, (2-methylphenyl)methyl alcohol, (3-methylphenyl)methyl alcohol, (4-methylphenyl)methyl alcohol, (2,4-dimethylphenyl)methyl alcohol, (2,6-dimethylphenyl)methyl alcohol, (3,5-dimethylphenyl)methyl alcohol, (2,4,6-trimethylphenyl)methyl alcohol, (2-sec-butylphenyl)methyl alcohol, (4-sec-butylphenyl)methyl alcohol, (2,4-di-sec-butylphenyl)methyl alcohol, (2,6-di-sec-butylphenyl)methyl alcohol, (2,4,6-tri-sec-butylphenyl)methyl alcohol, (2-tert-butylphenyl)methyl alcohol, (4-tert-butylphenyl)methyl alcohol, (2,4-di-tert-butylphenyl)methyl alcohol, (2,6-di-tert-butylphenyl)methyl alcohol, (2,4,6-tri-tert-butylphenyl)methyl alcohol, (4-biphenyl)methyl alcohol, (1-naphthyl)methyl alcohol, (2-naphthyl)methyl alcohol, (1-anthryl)methyl alcohol, (2-anthryl)methyl alcohol, (9-anthryl)methyl alcohol, 1-phenylethyl alcohol, 1-methyl-1-phenylethyl alcohol, diphenylmethyl alcohol and triphenylmethyl alcohol. Among these, benzyl alcohol, 1-phenylethyl alcohol and diphenylmethyl alcohol are preferred, and benzyl alcohol is particularly preferred.

The aralkyl alcohol may be used as a sole compound or may be used in combination of two or more kinds thereof.

### Using Amount of Aralkyl Alcohol

The using amount of the aralkyl alcohol is desirably from 180 to 250% by mole per 100% by mole of pentaerythritol. It is more preferably from 190 to 220% by mole, and further preferably from 200 to 210% by mole. In the case where the using amount of the aralkyl alcohol is less than 180% by mole, the recovery amount of the pentaerythritol diphosphonate as the target product of the invention is largely lowered to such an extent that exceeds the shortfall of the aralkyl alcohol. In the case where the using amount of the aralkyl alcohol exceeds 250% by mole, there are case where the load of the step of recovering or the step of disposing the excessive aralkyl alcohol is increased, which brings about industrial disadvantages.

### Method of adding Aralkyl Alcohol

The method for reacting the pentaerythritol dichlorophosphite with the aralkyl alcohol represented by the formula (2) in the presence of the organic base compound is not particularly limited. It is possible that the organic base compound is added to a solution or a suspension liquid of the pentaerythritol dichlorophosphite, and then the aralkyl alcohol is added thereto to effect reaction; a mixture of a solution or a suspension liquid of the pentaerythritol dichlorophosphite and the organic base compound is added to the aralkyl alcohol; a solution or a suspension liquid of the pentaerythritol dichlorophosphite is added to a mixture of the organic base compound and the aralkyl alcohol; or a mixture of the organic base compound and the aralkyl alcohol is added to a solution or a suspension liquid of the pentaerythritol dichlorophosphite to effect reaction.

### Reaction Temperature and Pressure

The temperature condition upon reacting the pentaerythritol dichlorophosphite with the aralkyl alcohol in the invention is desirably in a range of from -20 to 100°C, more preferably from -10 to 80°C. In the case where it is less than -20°C, the reaction rate is lowered to cause reduction in production efficiency. In the case where the reaction is effected at a temperature exceeding 100°C, on the other hand, decomposition of the pentaerythritol diphosphite brings about reduction in recovery amount of the pentaerythritol diphosphonate as the target product of the invention. The reaction is preferably effected under ordinary pressure.

### Reaction Time

In the invention, the reaction time upon reacting the pentaerythritol dichlorophosphite with the aralkyl alcohol is not particularly limited, and it is preferred that they are reacted over a period of from 1 to 500 minutes. It is more preferably from 5 to 300 minutes. In the case where the reaction is effected over a period of less than 1 minute, the heat generation amount per unit time is increased, whereby not only the reaction temperature is difficult to control, but also the load on equipments, such as a heat exchanger and a condenser, is increased. On the other hand, the reaction effected over a period exceeding 500 minutes brings about deterioration in production efficiency.

### Water Content in Reaction System

In the invention, the water content in the reaction system for reacting the pentaerythritol dichlorophosphite and the aralkyl alcohol is desirably 2,000 ppm or less, more preferably 1,000 ppm or less, further preferably 500 ppm or less, and particularly preferably 300 ppm or less. In the case where the water content in the reaction system exceeds 2,000 ppm, the recovery amount of the target product is seriously decreased to such an extent that exceeds the rate of formation of by-products through reaction of the pentaerythritol dichlorophosphite with water.

### Solvent

In the reaction (b), an inert solvent that is not involved in the reaction is used. In the case where the solution or suspension liquid of the pentaerythritol dichlorophosphite obtained in the reaction (a) is used as it is in the reaction (b), no solvent may further be added, or a further solvent may be added. In the case where the pentaerythritol dichlorophosphite is isolated in the reaction (a), a solvent is used.

Examples of the solvent include hexane, heptane, octane, decane, dodecane, diethyl ether, dipropyl ether, dibutyl ether, tetrahydrofuran, dioxane, methylene chloride, chloroform, carbon tetrachloride, ethyl acetate, benzene, chlorobenzene, o-dichlorobenzene, toluene, xylene, ethylbenzene, propylbenzene and butylbenzene. Preferred examples thereof include hexane, decane, dodecane, diethyl ether, dibutyl ether, dioxane, chlorobenzene, o-dichlorobenzene, toluene, xylene and ethylbenzene. More preferred examples thereof include hexane, dodecane, dibutyl ether, chlorobenzene, o-dichlorobenzene, toluene, xylene and ethyl benzene. Xylene is particularly preferred.

### Reaction Atmosphere

The reaction of the pentaerythritol dichlorophosphite with the aralkyl alcohol is desirably effected in an inert atmosphere. The inert atmosphere means such a state that oxygen gas, moisture, chlorine gas and the like capable of modifying the aralkyl alcohol and the organic base compound used in the invention and the resulting pentaerythritol diphosphite are substantially not present.

Specifically, the oxygen concentration in the system is desirably 5% or less, preferably 1% or less, and more preferably 100 ppm or less. Specific examples thereof include a method, in which the interior of the reaction system is substituted with an inert gas, such as nitrogen and argon, and then the reaction is carried out under a stream of the inert gas or in an atmosphere of the inert gas. The oxygen concentration can be measured by the zirconia analysis method defined in JIS B7983 or the like.

### Removal of Organic Base Compound Component

### Removing Amount of Organic Base Compound Component

In the case where the pentaerythritol dichlorophosphite is reacted with the aralkyl alcohol in the presence of the organic base compound in the reaction (b) of the invention, it is necessary that the organic base compound and a salt of the organic base compound (an organic base compound component) are removed from the reaction mixture containing the resulting pentaerythritol diphosphite to the exterior of the reaction system.

The rate of removing the organic base compound component to the exterior of the system is preferably 90% by mole or more of the organic base compound component removed, and more preferably 95% by mole or more of the organic base compound component removed, per 100% by mole of the organic base compound used. In the case where the rate of removing the organic base compound is less than 90% by mole, there is such a possibility that a side reaction is induced upon obtaining the pentaerythritol diphosphonate in the subsequent reaction (c) to decrease the recovery amount of the pentaerythritol diphosphonate. The method of removing the organic base compound component cannot be determined unconditionally since it depends on various conditions, such as the kind of the solvent used and the properties of the target product, and in the case where xylene is used as the solvent, for example, the organic base compound component can be conveniently removed by filtration or the like because the organic base compound forms a hydrochloride salt of the organic base compound, which is substantially insoluble in xylene.

### Atmosphere for removing Organic Base Compound Component

The operation of removing the organic base compound component from the resulting pentaerythritol diphosphite to the exterior of the system is preferably carried out in an inert atmosphere. The inert atmosphere means such a state that oxygen gas, moisture, chlorine gas and the like capable of modifying the pentaerythritol diphosphite of the invention are substantially not present. Specifically, the oxygen concentration in the system is desirably 5% or less, preferably 1% or less, and more preferably 100 ppm or less. Examples of the operation include a washing operation under a stream or in an atmosphere of nitrogen gas, argon gas or the like. The oxygen concentration can be measured by the zirconia analysis method defined in JIS B7983 or the like.

### Treatment after removing Organic Base Compound Component

The pentaerythritol diphosphite may be isolated from the solution or suspension liquid of the pentaerythritol diphosphite after removing the organic base compound component, but the solution or suspension liquid is preferably used as it is in the subsequent reaction (c). The workability and the production efficiency can be improved by omitting the step of isolating the pentaerythritol diphosphite.

It is also possible that the solution or suspension liquid of the pentaerythritol diphosphite after removing the organic base compound component is washed with water or an alkali aqueous solution and then used in the subsequent reaction (c).

It is further possible that a part of the solvent or the like is removed by distillation or the like from the solution or suspension liquid of the pentaerythritol diphosphite after removing the organic base compound component, which is then used in the subsequent reaction (c).

The method of using the solution or suspension liquid of the pentaerythritol diphosphite after removing the organic base compound component as it is in the subsequent reaction (c), and the method of using the solution or suspension liquid of the pentaerythritol diphosphite after removing the organic base compound component in the subsequent reaction (c) after washing with water or an alkali aqueous solution are preferred from the standpoint of production efficiency.

### Reaction (c) (Third Step Reaction; Arbuzov Reaction)

In the invention, the pentaerythritol diphosphite obtained in the reaction (b) is heat-treated in the presence of a halogenated compound represented by the formula (4) at a temperature of from 80 to 300°C to obtain the pentaerythritol diphosphonate represented by the formula (5).

### Solvent

### Kind of Solvent

In the reaction (c) of the invention, a solvent may be used upon heat-treating the pentaerythritol diphosphite. By using a solvent, the pentaerythritol diphosphite is dissolved or dispersed in the solvent to reduce the load of stirring. There is also such an advantage that heat for the heating treatment in the invention can be uniformly conducted to the reaction system.

The solvent is preferably a solvent containing one kind or two or more kinds selected from the group consisting of an aromatic hydrocarbon, an aliphatic hydrocarbon, a halogenated hydrocarbon and an oxygen atom-containing hydrocarbon, and is more preferably a solvent containing one kind or two or more kinds selected from the group consisting of an aromatic hydrocarbon, an aliphatic hydrocarbon and a halogenated hydrocarbon. The solvent desirably has a boiling point under ordinary pressure of from 100 to 300°C. The solvent is desirably a solvent of the same species as the inert solvent used upon reacting phosphorus trichloride with pentaerythritol of the invention from the standpoint of the load of isolation, recovery and the like of the solvent.

Examples of the solvent include hexane, heptane, octane, decane, dodecane, diethyl ether, dipropyl ether, dibutyl ether, tetrahydrofuran, dioxane, methylene chloride, chloroform, carbon tetrachloride, benzene, chlorobenzene, o-dichlorobenzene, toluene, xylene, ethylbenzene, propylbenzene, butylbenzene and the like. A solvent having a boiling point under ordinary pressure of from 100 to 300°C is preferably used, and examples thereof include decane, dodecane, dibutyl ether, dioxane, chlorobenzene, o-dichlorobenzene, toluene, xylene and ethylbenzene, with xylene being particularly preferred.

### Amount of Solvent

The using amount of the solvent is preferably 0.1 to 5 mole/L, and more preferably from 0.3 to 3 mole/L, in terms of the molar concentration of pentaerythritol used in the invention. In the case where it is less than 0.1 mole/L, there are cases where the forming rate of the pentaerythritol diphosphonate is extremely decreased to deteriorate the production efficiency.

### Heating Temperature

In the reaction (c) of the invention, the pentaerythritol diphosphonate is obtained by heat-treating the pentaerythritol diphosphite in the presence of the halogenated compound. The temperature for the heating treatment is from 80 to 300°C, and the preferred temperature for the heating treatment is from 100 to 250°C. In the case where the temperature for the heating treatment is less than 80°C, it is not preferred from the standpoint of production efficiency since the reaction rate is considerably lowered. In the case where the temperature for the heating treatment exceeds 300°C, it is not preferred since side reaction is accelerated to lower the recovery ratio of the pentaerythritol diphosphonate.

### Reaction Time

The period of time for the heating treatment in the reaction (c) in the invention is preferably from 1 to 1,200 minutes, and more preferably from 10 to 1,000 minutes. In the case where it is less than 1 minute, an unreacted matter remains, which sometimes brings about reduction in recovery ratio of the target pentaerythritol diphosphonate. A period of time exceeding 1,200 minutes sometimes causes deterioration in production efficiency.

### Halogenated Compound

### Kind of Halogenated Compound

In the reaction (c) in the invention, the halogenated compound represented by the formula (4) is used as a catalyst.

In the halogenated compound represented by the formula (4), Ar³ represents a substituted or unsubstituted aryl group having from 6 to 20 carbon atoms, and preferably a substituted or unsubstituted aryl group having from 6 to 10 carbon atoms. R⁷ and R⁸ may be the same as or different from each other, and each represents a hydrogen atom or a saturated or unsaturated hydrocarbon group having from 1 to 20 carbon atoms, preferably a hydrogen atom or a saturated or unsaturated hydrocarbon group having from 1 to 8 carbon atoms, more preferably a hydrogen atom or a saturated or unsaturated hydrocarbon group having from 1 to 4 carbon atoms, and particularly preferably a hydrogen atom. X represents a Br group.

Specific examples of the halogenated compound include benzylbromide, (1-bromoethyl)benzene, (2-bromoethyl)benzene and diphenylmethyl bromide, and among these, benzyl bromide, (1-bromoethyl)benzene and (2-bromoethyl)benzene are preferred, with benzyl bromide being particularly preferred.

By using the halogenated compound represented by the formula (4), the pentaerythritol diphosphonate having a higher purity can be obtained with a higher yield in comparison to the other halogenated compounds that are ordinarily used as a catalyst (for example, sodium iodide, tetrabutylammonium bromide and n-butyl iodide).

### Using Amount of Halogenated Compound

The using amount of the halogenated compound represented by the formula (4) used in the invention is not particularly limited and is preferably from 1 to 10 mole, and particularly preferably from 1.5 to 3 mole, per 1 mole of pentaerythritol used in the invention.

### Arbuzov Reaction System

### Water Content

The water content in the reaction system of the reaction (c) in the invention is not particularly determined and is desirably 2,000 ppm or less, and more preferably 1, 000 ppm or less. In the case where the water content is larger than 2, 000 ppm, the rate of decrease in recovery rate of the target product becomes larger than such an extent that is expected from by-products derived from the reaction between the pentaerythritol diphosphite used in the invention and water although the reason therefor is unclear.

### Alcohol Amount

The alcohol amount in the reaction system of the reaction (c) in the invention is preferably 30, 000 ppm or less, and more preferably 10,000 ppm or less. The alcohol may be mixed in the production process of the pentaerythritol diphosphite, and in the case where the pentaerythritol diphosphite containing a large amount of the alcohol is used, the recovery rate of the target pentaerythritol diphosphonate is largely decreased.

### Reaction Atmosphere

The heating treatment in the reaction (c) in the invention is preferably carried out in an inert atmosphere. The inert atmosphere is such a state that oxygen gas, moisture and the like capable of modifying the pentaerythritol diphosphite and the like used in the invention are substantially not present. Specifically, the oxygen gas concentration in the system is desirably 5% or less, preferably 1% or less, and more preferably 100 ppm or less. Specific examples thereof include a method, in which the interior of the reaction system is substituted with an inert gas, such as nitrogen and argon, and then the heating treatment is carried out under a stream of the inert gas or in an atmosphere of the inert gas. The oxygen concentration can be measured by the zirconia analysis method defined in JIS B7983 or the like.

### Purifying Method

In the invention, the pentaerythritol diphosphonate obtained by the reaction (c) is preferably purified in the following method. The purifying method is that the pentaerythritol diphosphonate as the target product is heated and washed by using a compound represented by the general formula R⁹-OH. The washing temperature is from 50 to 120°C. A temperature exceeding 120°C is not preferred since there is such a possibility that the pentaerythritol diphosphonate thus produced is decomposed. A temperature lower than 50°C is not preferred from the standpoint of production efficiency since the washing operation is necessarily repeated in many times for obtaining the pentaerythritol diphosphonate having a reduced content of a remaining volatile matter due to the low washing efficiency. By employing the aforementioned purifying method, the pentaerythritol diphosphonate in a powder form becomes crystals in a flake form, which are excellent in drying property.

Examples of the compound represented by the general formula R⁹-OH include methanol, ethanol, propanol and butanol, and methanol is preferred from the standpoint of economy and operationality.

In the case where the aforementioned purifying method is applied, the remaining volatile matter in the pentaerythritol diphosphonate is 5,000 ppm or less. The pentaerythritol diphosphonate thus having a small remaining volatile matter content is suppressed in gas generation, which is a significant problem upon mixing with a resin, and furthermore coloration of the resin and degradation of the resin itself can also be suppressed. In other words, the pentaerythritol diphosphonate obtained through the purifying method is considerably useful from practical viewpoint.

The pentaerythritol diphosphonate produced by the process of the invention is preferably used as a fire retarding agent for a styrene resin (such as impact resistant polystyrene, polystyrene and an ABS resin), a polyester resin and the like. The fire retardant resin composition has a considerably high fire retarding capability and is useful as a material for forming various kinds of molded articles, such as a part of a home electric appliance, an electric or electronic part, an automobile part, a mechanical or structural part, a cosmetic container and the like. Specifically, it can be preferably used as a circuit breaker part, a switch part, an electric motor part, an ignition coil housing, a mains connector, an electric power socket, a coil bobbin, a connector, a relay housing, a fuse housing, a flyback transformer part, a focus block part, a distributor cap, a harness connector and the like. It is also useful as a housing, a casing or a chassis, which is decreasing in thickness, for example, an electronic or electric part (such as a home electric appliance or an office automation equipment, e.g., a telephone set, a personal computer, a printer, a facsimile machine, a duplicator, a video cassette recorder, an audio instrument, and parts thereof). It is also useful as a mechanical or structural part of a home electric appliance or an office automation equipment that is required to have excellent heat resistance and fire retardancy, such as a printer chassis, a fixing unit part and a facsimile machine.

### EXAMPLE

The invention will be described with reference to examples, but the invention is not limited to the examples. The evaluations were carried out in the following manners.
(1) Water Content of Raw Materials
   It was measured by the Karl Fischer method using a coulometric titration water content measuring apparatus, Model CA-06, produced by Mitsubishi Chemical Corp.
(2) Measurement of Purity of Pentaerythritol Diphosphonate
   The purity was obtained by an HPLC measurement at a measuring temperature of 40°C with Separations Module 2690, produced by Waters Corp. as an HPLC apparatus, Dual λ Absorbance Detector 2487 (UV 260 nm), produced by Waters Corp. as a detector, ODS-7 (300 mm, diameter × 4 mmφ) produced by Nomura Chemical Co., Ltd. as a chromatography column, and a mixed solution of acetonitrile and water at 6: 4 as an elution solvent.
(3) Measurement of Purity of Recovered Organic Base Compound
   An ¹H-NMR measurement was carried out at room temperature by using a 300 MHz NMR measuring apparatus, produced by Varian, Inc. with deuterated chloroform as a solvent, and the purity was obtained from the relative area strength ratio of the target product peak with respect to all the peaks in the spectrum thus obtained.

The reagents used in the examples were as follows.
(1) Pentaerythritol
   Pentarit-S (purity: 99.4%) of Koei Chemical Co., Ltd. was previously dried and then used. The water content thereof was 38 ppm.
(2) Phosphorous Trichloride
   Phosphorous trichloride having a purity of 99% or more available from Kishida Chemical Co., Ltd. was previously distilled under a nitrogen stream and then used.
(3) N,N-Diethylaniline
   A guaranteed reagent available from Wako Pure Chemical Industries, Ltd. was dried with molecular sieves and then used. The water content thereof was 22 ppm.
(4) Pyridine
   A guaranteed reagent available from Wako Pure Chemical Industries, Ltd. was dried with molecular sieves and then used. The water content thereof was 20 ppm.
(5) Xylene
   A guaranteed reagent available from Wako Pure Chemical Industries, Ltd. was dried with molecular sieves and then used. The water content thereof was 12 ppm.
(6) Benzyl Alcohol
   A guaranteed reagent available from Wako Pure Chemical Industries, Ltd. was dried with molecular sieves and then used. The water content thereof was 25 ppm.
(7) Benzyl Bromide
   A guaranteed reagent available from Wako Pure Chemical Industries, Ltd. was dried with molecular sieves and then used. The water content thereof was 20 ppm.
(8) Methanol
   A guaranteed reagent available from Wako Pure Chemical Industries, Ltd. was used as it was.
(9) Sodium Hydroxide
   A guaranteed reagent available from Wako Pure Chemical Industries, Ltd. was used as it was.

### [Example 1]

### (A) Reaction (a)

A 500-mL four-neck glass flask was equipped with a stirring device having a Teflon-coated stirring rod having Teflon stirring blades attached, a vacuum seal and a stirrer, a glass reflux condenser having a calcium chloride tube attached to the top of the condenser, a 100-mL dropping funnel with an equalizer line having a glass valve attached to the top thereof, and an alcohol thermometer. The dropping funnel was heated with a heat gun to remove water content on the wall while dry nitrogen was flowed therein through the glass valve on the top of the dropping funnel. After cooling to room temperature, 27.0 g (0.198 mole) of pentaerythritol, 80 mL of xylene and 0.800 g (0.0101 mole) of pyridine were added to the reaction apparatus.

56.4 g (0.411 mole) of phosphorous trichloride was added to the dropping funnel. A refrigerant at -20°C was flowed in the reflux condenser, and stirring was started. The phosphorous trichloride was added dropwise over about 30 minutes. The temperature in the system was increased by about 4°C immediately after starting the dropping, but thereafter was substantially constant around room temperature. After completing the dropping, the stirring was continued at room temperature for 1 hour to obtain a white suspension liquid of 3,9-dichloro-2,4,8,10-tetraoxa-3,9-diphosphaspiro[5.5]unde cane (hereinafter, referred to as pentaerythritol dichlorophosphite). Hydrogen chloride generated during the reaction was absorbed by a sodium hydroxide aqueous solution outside the reaction system through the reflux condenser.

After closing the glass valve through which dry nitrogen was introduced, the calcium chloride tube was removed, and the reflux condenser was connected to a diaphragm pump with a pressure tube. While sufficiently cooling the reflux condenser, the interior of the reaction vessel was depressurized to 3, 000 Pa with the diaphragm pump, and the white suspension liquid was stirred for 30 minutes. The gas thus discharged by the diaphragm pump was blown into a sodium hydroxide aqueous solution. After completing the depressurizing, the diaphragm pump was stopped, and the glass valve was opened to flow dry nitrogen in the reaction vessel.

### (B) Reaction (b)

The dropping funnel for adding dropwise phosphorous trichloride was removed from the reaction apparatus, and it was exchanged to a previously dried 200-mL dropping funnel with an equalizer line. 42.9 g (0.397 mole) of benzyl alcohol and 100 mL of xylene were added to the dropping funnel. 59.5 g (0.399 mole) of N,N-diethylaniline and 100 mL of xylene were added to the four-neck flask. The contents were stirred while the reflux condenser was cooled by flowing a refrigerant. After cooling the interior of the reaction system to 5°C with an ice bath, a xylene solution of benzyl alcohol was added dropwise thereto from the dropping funnel over 1 hour. The reaction system became white slurry associated with the progress of reaction. The temperature of the interior of the reaction system was increased to 8°C at maximum during the dropping. After completing the dropping, the reaction system was left to room temperature over 30 minutes and maintained as it was for 1 hour, so as to obtain a reaction mixture containing 3,9-bis((phenylmethyl)oxy)-2,4,8,10-tetraoxa-3,9-diphospha spiro[5.5]undecane (hereinafter, referred to as pentaerythritol dibenzylphosphite).

The resulting reaction mixture was filtered by using a glass filter in a nitrogen atmosphere to obtain a solution of pentaerythritol dibenzylphosphite. 100 mL of dried xylene was used for washing the white solid on the glass filter. Upon adding the white solid on the glass filter into a sodium hydroxide aqueous solution, it was separated into two layers, and the upper layer was N,N-diethylaniline. The weight and the ¹H-NMR purity of the upper layer revealed that 99% of the used N,N-diethylaniline was recovered.

### (C) Reaction (c)

The pentaerythritol dibenzylphosphite solution obtained in (B) was transferred to a 500-mL glass four-neck flask filled with dry nitrogen equipped with a stirring device having a Teflon-coated stirring rod having Teflon stirring blades attached, a vacuum seal and a stirrer, a glass reflux condenser having a calcium chloride tube attached to the top of the condenser, and an alcohol thermometer. 71.3 g (0.417 mole) of benzyl bromide was further added thereto, and stirring was started at 300 rpm in a nitrogen atmosphere. A refrigerant was flowed in the reflux condenser, and the four-neck flask was heated by using an oil bath at 140°C for 6 hours. The contents of the flask were refluxed at 135°C, and white precipitate was gradually formed from the uniform solution to become white slurry. After cooling to room temperature, the white slurry was filtered with a glass filter. The white powder on the glass filter was washed once with 300 mL of xylene and twice with 300 mL of methanol and then dried in vacuum to obtain 68.5 g of white powder.

It was found that 3,9-bis(phenylmethyl)-2,4,8,10-tetraoxa-3,9-diphosphaspiro [5.5]undecane (hereinafter, referred to as pentaerythritol dibenzylphosphonate) having an HPLC purity of 98.0% was obtained at a yield of 84.6%.

### [Example 2]

In (A) of Example 1, a heating treatment was carried out instead of the depressurizing treatment. The heating treatment was carried out in such a manner that the white suspension liquid of the pentaerythritol dichlorophosphite was heated to 60°C, and then further stirred for 20 minutes, followed by cooling by standing. Hydrogen chloride generated during the heating treatment was absorbed by a sodium hydroxide aqueous solution outside the reaction system through the reflux condenser. The yield and the HPLC purity of the resulting pentaerythritol dibenzylphosphonate are shown in Table 1.

### [Example 3]

The same operations as in Example 1 were carried out except that, in (A) of Example 1, the depressurizing treatment was not carried out. The yield and the HPLC purity of the resulting pentaerythritol dibenzylphosphonate are shown in Table 1.

### [Example 4]

The same operations as in Example 1 were carried out except that, in (A) of Example 1, the pentaerythritol dichlorophosphite was isolated from the white suspension liquid of the pentaerythritol dichlorophosphite after the depressurizing treatment. The yield and the HPLC purity of the resulting pentaerythritol dibenzylphosphonate are shown in Table 1.

### [Example 5]

The same operations as in Example 1 were carried out except that, in (A) of Example 1, toluene was used as the solvent instead of xylene, and the pentaerythritol dichlorophosphite was isolated from the white suspension liquid of the pentaerythritol dichlorophosphite after the depressurizing treatment. The yield and the HPLC purity of the resulting pentaerythritol dibenzylphosphonate are shown in Table 1.

### [Example 6]

The same operations as in Example 1 were carried out except that, in (A) of Example 1, chlorobenzene was used as the solvent instead of xylene. The yield and the HPLC purity of the resulting pentaerythritol dibenzylphosphonate are shown in Table 1.

### [Example 7]

The same operations as in Example 1 were carried out except that, in (A) of Example 1, o-dichlorobenzene was used as the solvent instead of xylene. The yield and the HPLC purity of the resulting pentaerythritol dibenzylphosphonate are shown in Table 1.

### [Example 8]

The same operations as in Example 1 were carried out except that, in (A) of Example 1, dibutyl ether was used as the solvent instead of xylene. The yield and the HPLC purity of the resulting pentaerythritol dibenzylphosphonate are shown in Table 1.

### [Example 9]

The same operations as in Example 1 were carried out except that, in (A) of Example 1, 54.3 g (0.396 mole) of phosphorous trichloride was used. The yield and the HPLC purity of the resulting pentaerythritol dibenzylphosphonate are shown in Table 1.

### [Example 10]

The same operations as in Example 1 were carried out except that, in (A) of Example 1, 59.8 g (0.436 mole) of phosphorous trichloride was used. The yield and the HPLC purity of the resulting pentaerythritol dibenzylphosphonate are shown in Table 1.

### [Example 11]

The same operations as in Example 1 were carried out except that, in (A) of Example 1, N,N-dimethylformamide was used as the catalyst instead of pyridine. The yield and the HPLC purity of the resulting pentaerythritol dibenzylphosphonate are shown in Table 1.

### [Example 12]

The same operations as in Example 1 were carried out except that, in (A) of Example 1, the reaction temperature was changed to 10°C, and the reaction time was changed to 5 hours (30 minutes for dropwise addition of phosphorous trichloride + 4.5 hours for stirring). The yield and the HPLC purity of the resulting pentaerythritol dibenzylphosphonate are shown in Table 1.

### [Example 13]

The same operations as in Example 1 were carried out except that, in (A) of Example 1, the reaction temperature was changed to 30°C. The yield and the HPLC purity of the resulting pentaerythritol dibenzylphosphonate are shown in Table 1.

### [Example 14]

The same operations as in Example 1 were carried out except that, in (B) of Example 1, pyridine was used instead of N,N-diethylaniline. The recovery amount of pyridine was measured in such a manner that pyridine hydrochloride was dissolved in water, neutralized with alkali, and then distilled. The yield and the HPLC purity of the resulting pentaerythritol dibenzylphosphonate are shown in Table 2.

### [Example 15]

The same operations as in Example 1 were carried out except that, in (B) of Example 1, trimethylamine was used instead of N,N-diethylaniline. The recovery amount of trimethylamine was measured in such a manner that trimethylamine hydrochloride was dissolved in water, neutralized with alkali, and then distilled. The yield and the HPLC purity of the resulting pentaerythritol dibenzylphosphonate are shown in Table 2.

### [Example 16]

The same operations as in Example 1 were carried out except that, in (B) of Example 1, tributylamine was used instead of N,N-diethylaniline. The yield and the HPLC purity of the resulting pentaerythritol dibenzylphosphonate are shown in Table 2.

### [Example 17]

The same operations as in Example 1 were carried out except that, in (B) of Example 1, N,N-dimethylaniline was used instead of N,N-diethylaniline. The yield and the HPLC purity of the resulting pentaerythritol dibenzylphosphonate are shown in Table 2.

### [Example 18]

The same operations as in Example 1 were carried out except that, in (B) of Example 1, 40. 6 g (0.376 mole) of benzyl alcohol was used. The yield and the HPLC purity of the resulting pentaerythritol dibenzylphosphonate are shown in Table 2.

### [Example 19]

The same operations as in Example 1 were carried out except that, in (B) of Example 1, 45.0 g (0.416 mole) of benzyl alcohol was used. The yield and the HPLC purity of the resulting pentaerythritol dibenzylphosphonate are shown in Table 2.

### [Example 20]

The same operations as in Example 1 were carried out except that, in (B) of Example 1, 62.0 g (0.416 mole) of N,N-diethylaniline was used. The yield and the HPLC purity of the resulting pentaerythritol dibenzylphosphonate are shown in Table 2.

### [Example 21]

The same operations as in Example 1 were carried out except that, in (B) of Example 1, 65.0 g (0.436 mole) of N,N-diethylaniline was used, the pentaerythritol dibenzylphosphite solution after filtering was washed once with 400 mL of a 0.5N sodium hydroxide aqueous solution and twice with the same amount of pure water and was dried over magnesium sulfate, and a solution obtained by filtering off magnesium sulfate was used in the reaction of (C). The yield and the HPLC purity of the resulting pentaerythritol dibenzylphosphonate are shown in Table 2.

### [Example 22]

The same operations as in Example 1 were carried out except that, in (B) of Example 1, the pentaerythritol dibenzylphosphite solution after filtering was concentrated with an evaporator to obtain a white solid, which was dried in vacuum at 60°C for 8 hours, and 280 mL of xylene was added to the dried white solid to obtain a solution, which was used in the reaction (C). The yield and the HPLC purity of the resulting pentaerythritol dibenzylphosphonate are shown in Table 2.

### [Example 23]

The same operations as in Example 1 were carried out except that, in (B) of Example 1, the pentaerythritol dibenzylphosphite solution after filtering was washed once with 400 mL of a 0.5N sodium hydroxide aqueous solution and twice with the same amount of pure water and was dried over magnesium sulfate, and a solution obtained by filtering off magnesium sulfate was used in the reaction of (C). The yield and the HPLC purity of the resulting pentaerythritol dibenzylphosphonate are shown in Table 2.

### [Comparative Example 1]

The same operations as in Example 1 were carried out except that, in (B) of Example 1, N,N-diethylaniline was not used. No pentaerythritol dibenzylphosphonate was obtained.

### [Comparative Example 2]

The same operations as in Example 1 were carried out except that, in (B) of Example 1, the reaction mixture containing the pentaerythritol dibenzylphosphite was used as it was in the reaction of (C) without filtration. No pentaerythritol dibenzylphosphonate was obtained.

### [Example 24]

The same operations as in Example 1 were carried out except that, in (C) of Example 1, the white powder on the glass filter was washed once with 300 mL of xylene and washed by refluxing under heat with 300 mL of methanol for 2 hours, and the solid was dried in vacuum. The yield and the HPLC purity of the resulting pentaerythritol dibenzylphosphonate are shown in Table 3.

### [Example 25]

The same operations as in Example 1 were carried out except that, in (B) of Example 1, the pentaerythritol dibenzylphosphite solution after filtering was concentrated with an evaporator to obtain a white solid, which was dried in vacuum at 60°C for 8 hours, and the dried white solid was used in the reaction (C) (in which no solvent was used), the reaction temperature was adjusted to from 150 to 200°C. The yield and the HPLC purity of the resulting pentaerythritol dibenzylphosphonate are shown in Table 3.

### [Example 26]

The same operations as in Example 1 were carried out except that, in (C) of Example 1, the amount of xylene as the solvent was changed to 400 mL, and the reaction time was changed to 10 hours. The yield and the HPLC purity of the resulting pentaerythritol dibenzylphosphonate are shown in Table 3.

### [Example 27]

The same operations as in Example 1 were carried out except that, in (C) of Example 1, the amount of xylene as the solvent was adjusted to 200 mL. The yield and the HPLC purity of the resulting pentaerythritol dibenzylphosphonate are shown in Table 3.

### [Example 28]

The same operations as in Example 1 were carried out except that, in (C) of Example 1, 67.7 g (0.396 mole) of benzyl bromide was used. The yield and the HPLC purity of the resulting pentaerythritol dibenzylphosphonate are shown in Table 3.

### [Example 29]

The same operations as in Example 1 were carried out except that, in (C) of Example 1, 84.6 g (0.495 mole) of benzyl bromide was used. The yield and the HPLC purity of the resulting pentaerythritol dibenzylphosphonate are shown in Table 3.

### [Comparative Example 3]

The same operations as in Example 1 were carried out except that, in (C) of Example 1, 0.0079 mole of sodium iodide was used instead of benzyl bromide. The yield and the HPLC purity of the resulting pentaerythritol dibenzylphosphonate are shown in Table 3.

### [Comparative Example 4]

The same operations as in Example 1 were carried out except that, in (C) of Example 1, 0.04 mole of tetrabutylammonium bromide was used instead of benzyl bromide. The yield and the HPLC purity of the resulting pentaerythritol dibenzylphosphonate are shown in Table 3.

### [Comparative Example 5]

The same operations as in Example 1 were carried out except that, in (C) of Example 1, 0.12 mole of butyl iodide was used instead of benzyl bromide. The yield and the HPLC purity of the resulting pentaerythritol dibenzylphosphonate are shown in Table 3.

### [Comparative Example 6]

The same operations as in Example 1 were carried out except that, in (C) of Example 1, the reaction temperature was adjusted to 40°C. No pentaerythritol dibenzylphosphonate was obtained.

### [Comparative Example 7]

The same operations as in Example 1 were carried out except that, in (C) of Example 1, benzyl bromide was not used. Little pentaerythritol dibenzylphosphonate was obtained.

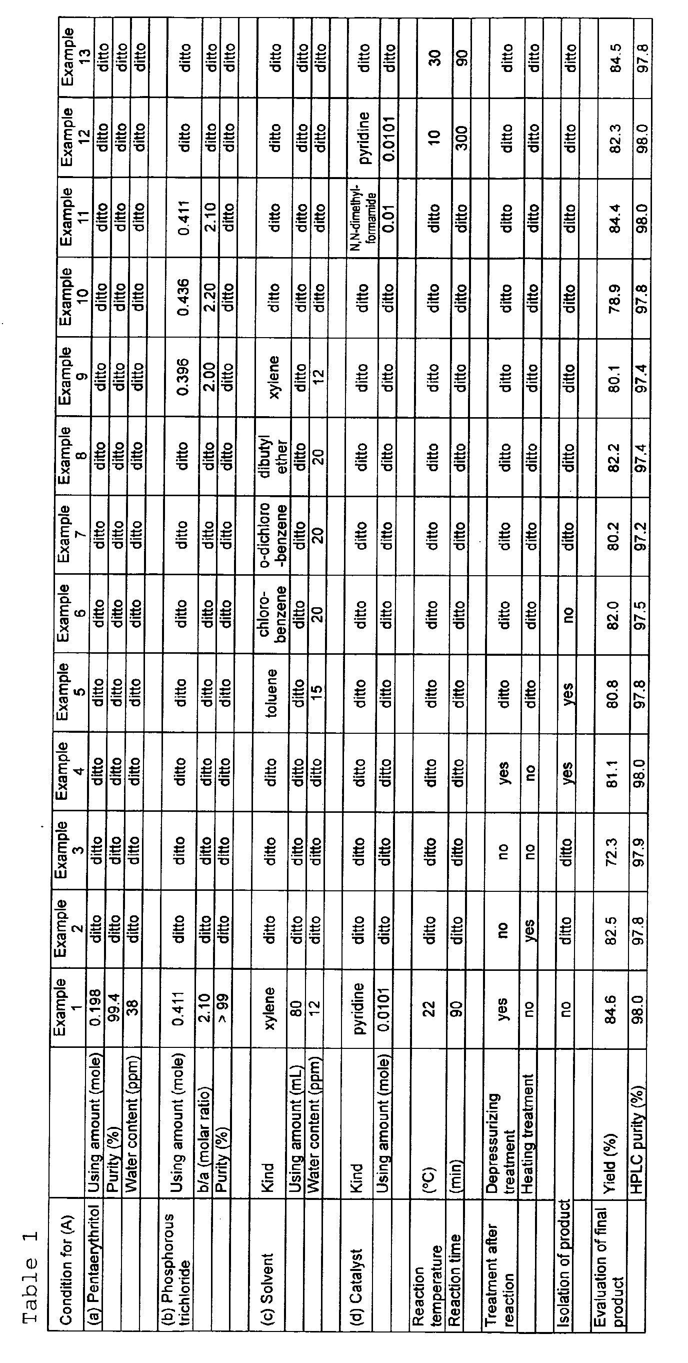

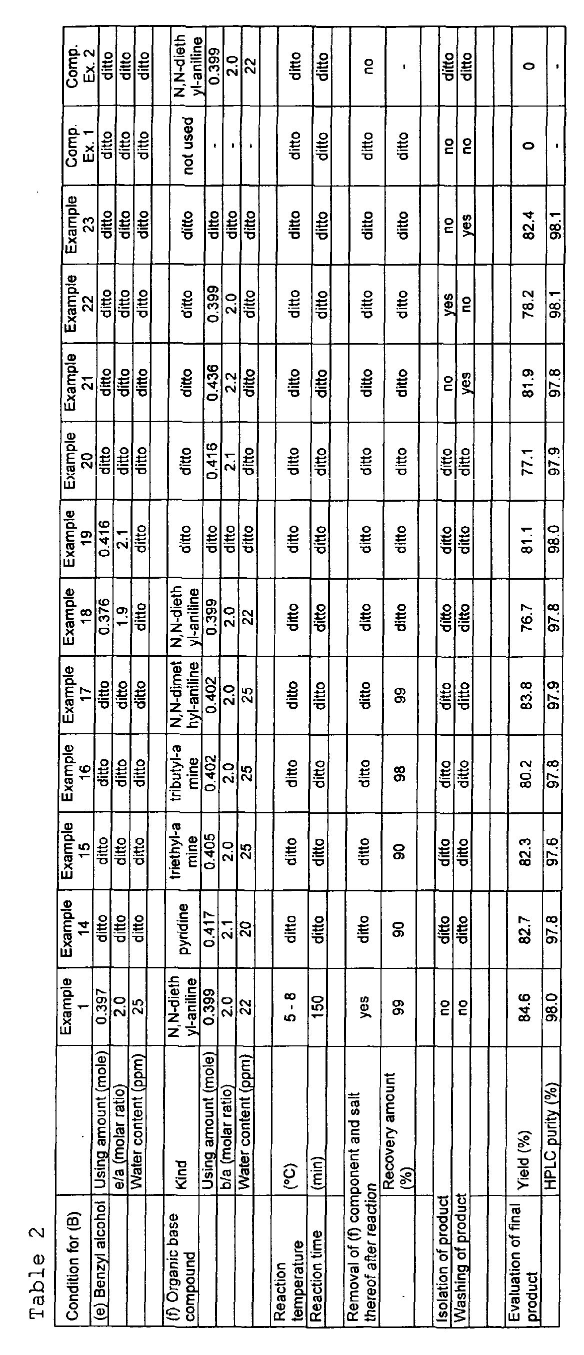

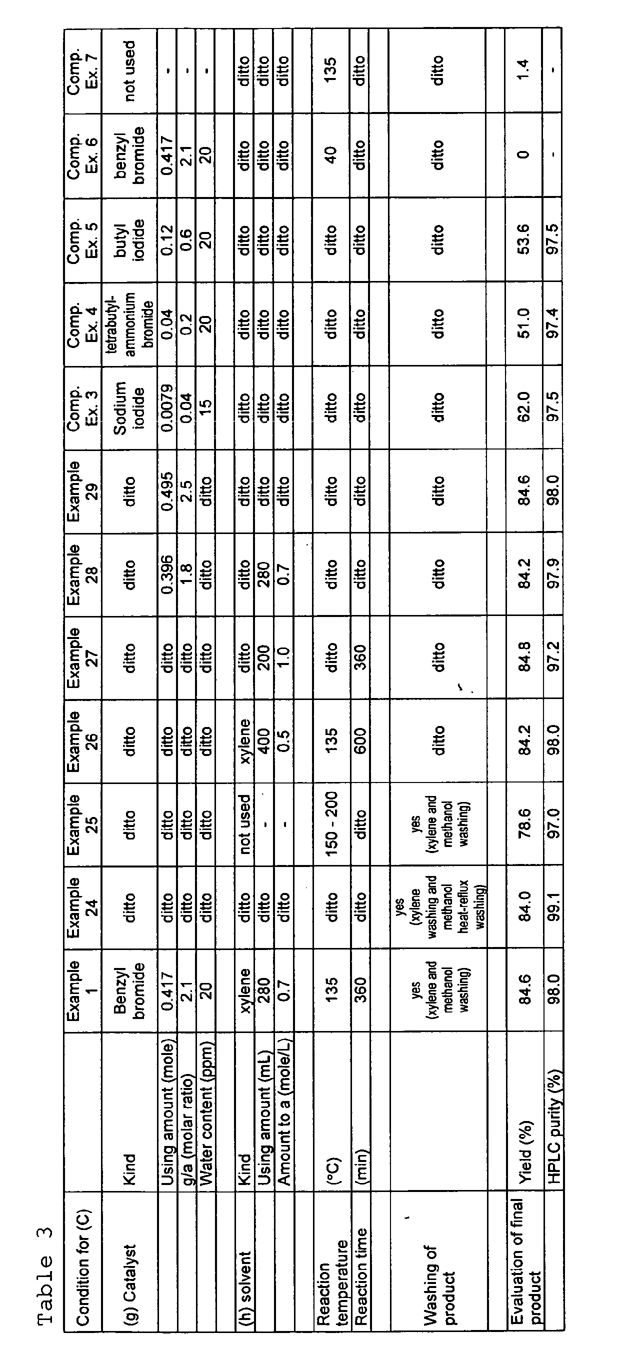

### EFFECT OF THE INVENTION

According to the production process of the invention, a particular pentaerythritol diphosphonate capable of being utilized as a fire retarding agent and the like can be provided with high purity and high yield by an industrially advantageous process excellent in productivity.

## Claims

1. A process for producing a pentaerythritol diphosphonate represented by the formula (5) **characterized by** (A) reacting phosphorus trichloride with pentaerythritol in the presence of an inert solvent to obtain pentaerythritol dichlorophosphite represented by the formula (1) (reaction (a)), (B) reacting the pentaerythritol dichlorophosphite with an aralkyl alcohol represented by the formula (2) to obtain a pentaerythritol diphosphite represented by the formula (3) (reaction (b)), and (C) heat-treating the pentaerythritol diphosphite in the presence of a halogenated compound represented by the formula (4) on the condition of a temperature of from 80 to 300°C (reaction (c)): 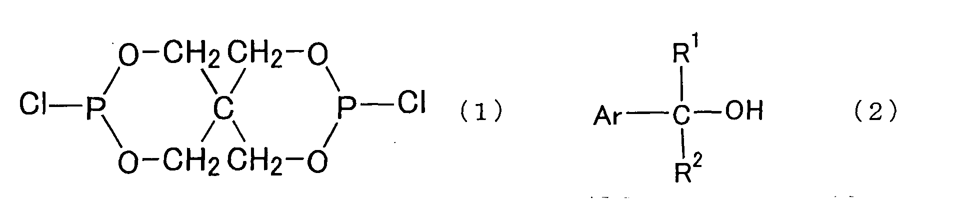 wherein Ar represents a substituted or unsubstituted aryl group having from 6 to 20 carbon atoms, and R¹ and R², which may be the same as or different from each other, each represents a hydrogen atom, a substituted or unsubstituted aryl group having from 6 to 20 carbon atoms, or a saturated or unsaturated hydrocarbon group having from 1 to 20 carbon atoms, 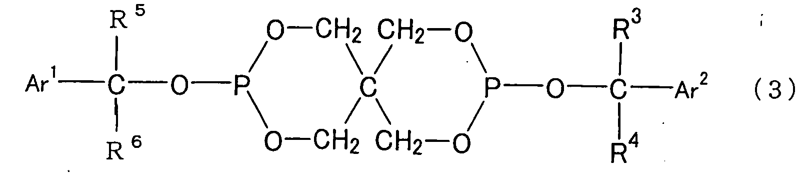 wherein Ar¹ and Ar², which may be the same as or different from each other, each represents a substituted or unsubstituted aryl group having from 6 to 20 carbon atoms, and R³, R⁴, R⁵ and R⁶, which may be the same as or different from each other, each represents a hydrogen atom, a substituted or unsubstituted aryl group having from 6 to 20 carbon atoms, or a saturated or unsaturated hydrocarbon group having from 1 to 20 carbon atoms, 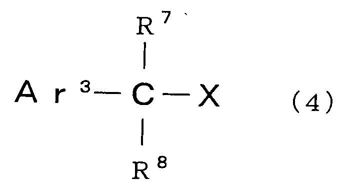 wherein Ar³ represents a substituted or unsubstituted aryl group having from 6 to 20 carbon atoms, R⁷ and R⁸, which may be the same as or different from each other, each represents a hydrogen atom or a saturated or unsaturated hydrocarbon group having from 1 to 20 carbon atoms, and X represents a Br group, 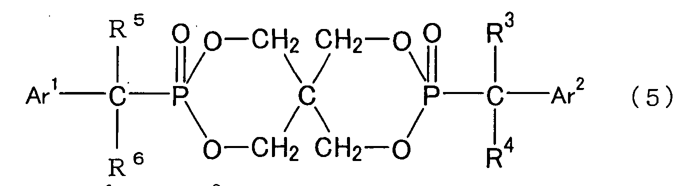 wherein Ar¹ and Ar², which may be the same as or different from each other, each represents a substituted or unsubstituted aryl group having from 6 to 20 carbon atoms, and R³, R⁴, R⁵ and R⁶, which may be the same as or different from each other, each represents a hydrogen atom, a substituted or unsubstituted aryl group having from 6 to 20 carbon atoms, or a saturated or unsaturated hydrocarbon group having from 1 to 20 carbon atoms.

2. The process for producing a pentaerythritol diphosphonate as described in claim 1, wherein the reaction (b) is effected in the presence of an organic base compound.

3. The process for producing a pentaerythritol diphosphonate as described in claim 2, wherein the organic base compound is used in an amount of from 180 to 400% by mole based on pentaerythritol in the reaction (b).

4. The process for producing a pentaerythritol diphosphonate as described in claim 2, wherein the organic base compound and a salt of the organic base compound (hereinafter, referred to as an organic base compound component) are isolated and removed from a reaction mixture containing the pentaerythritol diphosphite obtained in the reaction (b) to an exterior of a reaction system, and the pentaerythritol diphosphite, from which the organic base compound component has been removed, is used in the reaction (c).

5. The process for producing a pentaerythritol diphosphonate as described in claim 4, wherein the organic base compound component to be isolated and removed to the exterior of the reaction system described in claim 4 is 90% by mole or more per 100% by mole of the organic base compound used.

6. The process for producing a pentaerythritol diphosphonate as described in claim 4, wherein the pentaerythritol diphosphite is not isolated from a solution or a suspension liquid of the pentaerythritol diphosphite, from which the organic base compound component has been isolated and removed to the exterior of the reaction system, and is used in the subsequent reaction (c).

7. The process for producing a pentaerythritol diphosphonate as described in claim 1, wherein a solution or a suspension liquid of the pentaerythritol dichlorophosphite obtained in the reaction (a) is subjected to a heating treatment or a depressurizing treatment.

8. The process for producing a pentaerythritol diphosphonate as described in claim 1, wherein the pentaerythritol dichlorophosphite is not isolated from a solution or a suspension liquid of the pentaerythritol dichlorophosphite obtained in the reaction (a), and is used in the subsequent reaction (b).

9. The process for producing a pentaerythritol diphosphonate as described in claim 1, wherein the inert solvent used in the reaction (a) is a solvent comprising one kind or two or more kinds selected from the group consisting of an aromatic hydrocarbon, an aliphatic hydrocarbon, a halogenated hydrocarbon and an oxygen atom-containing hydrocarbon.

10. The process for producing a pentaerythritol diphosphonate as described in claim 1, wherein in the reaction (a), phosphorous trichloride is used in an amount of from 195 to 240% by mole based on pentaerythritol.

11. The process for producing a pentaerythritol diphosphonate as described in claim 1, wherein the reaction (a) is effected in the presence of an organic base compound.

12. The process for producing a pentaerythritol diphosphonate as described in claim 1, wherein in the reaction (b), the aralkyl alcohol is used in an amount of from 180 to 250% by mole based on pentaerythritol.

13. The process for producing a pentaerythritol diphosphonate as described in claim 1, wherein the halogenated compound used in the reaction (c) is benzyl bromide.

14. The process for producing a pentaerythritol diphosphonate as described in claim 1, wherein the halogenated compound used in the reaction (c) is benzyl bromide, and the benzyl bromide is used in an amount of from 1.5 to 3 mole per 1 mole of pentaerythritol.

15. The process for producing a pentaerythritol diphosphonate as described in claim 1, wherein the pentaerythritol diphosphonate represented by the formula (5) is a dibenzylpentaerythritol diphosphonate represented by the formula (5-a):
